(19) Europäisches Patentamt / European Patent Office / Office européen des brevets

(11) **EP 3 916 066 B1**

(12) **EUROPÄISCHE PATENTSCHRIFT**

(45) Veröffentlichungstag und Bekanntmachung des Hinweises auf die Patenterteilung:
**10.01.2024 Patentblatt 2024/02**

(21) Anmeldenummer: **21172526.2**

(22) Anmeldetag: **06.05.2021**

(51) Internationale Patentklassifikation (IPC):
*C09J 163/04* (2006.01)  *C09J 163/00* (2006.01)
*C09J 7/38* (2018.01)  *C09J 9/00* (2006.01)
*C09J 201/02* (2006.01)  *C08G 59/50* (2006.01)
*C08G 59/40* (2006.01)  *C08G 59/68* (2006.01)

(52) Gemeinsame Patentklassifikation (CPC):
(C-Sets verfügbar)
**C09J 7/10; C08G 59/4021; C08G 59/5013;**
**C08G 59/686; C09J 163/04;** C08G 2650/50;
C09J 2203/354; C09J 2463/00; C09J 2471/00

(Forts.)

(54) **VORVERNETZTE EPOXID-HAFTKLEBMASSEN UND KLEBEBÄNDER, WELCHE DIESE ENTHALTEN**

PRE-CROSSLINKED EPOXY ADHESIVES AND ADHESIVE TAPES CONTAINING THE SAME

MATIÈRES ADHÉSIVES ÉPOXY PRÉ-RÉTICULÉES ET RUBANS ADHÉSIFS LES CONTENANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2020 DE 102020206619**

(43) Veröffentlichungstag der Anmeldung:
**01.12.2021 Patentblatt 2021/48**

(73) Patentinhaber: **tesa SE**
**22848 Norderstedt (DE)**

(72) Erfinder:
• **Schuh, Dr. Christian**
**22767 Hamburg (DE)**

• **HAIDA, Philipp**
**23858 Reinfeld (DE)**

(74) Vertreter: **tesa SE**
**Hugo-Kirchberg-Straße 1**
**22848 Norderstedt (DE)**

(56) Entgegenhaltungen:
**WO-A1-93/14141**

EP 3 916 066 B1

(52) Gemeinsame Patentklassifikation (CPC): (Forts.)

C-Sets
C09J 2463/00, C09J 2471/00

**Beschreibung**

Die Erfindung betrifft ein Verfahren zur Herstellung einer vorvernetzten Epoxid-Haftklebemasse und die daraus erhaltenen Epoxid-Haftklebemassen. Ferner betrifft die Erfindung ein Klebeband, das die Epoxid-Haftklebemasse enthält, sowie dessen Verwendung zum Fixieren von Punkthaltern oder von Gegenständen im Automobil. Zudem betrifft die Erfindung eine härtbare Zusammensetzung.

**Stand der Technik**

Klebemassen auf Epoxid-Amin-Basis sind im Stand der Technik bekannt. Beispielsweise beschreibt die EP 2 553 035 A1 vorvernetzte Systeme. Kern der Anmeldung ist die Kombination aus Vorvernetzung und einem Tg über Raumtemperatur. Auf diese Weise können Spannungen in den beanspruchten "Shape-memory" Klebstofffilmen nicht abgebaut werden, da sich die Tapes unterhalb ihrer Glasübergangstemperatur befinden. Dementsprechend sind solche Systeme nicht haftklebrig. Die US 20130267136 A1 offenbart ein Verfahren, in dem eine Epoxidharzmischung mit einem ersten Härter abgemischt wird, wobei der bei RT nicht mit dem Epoxidharz reagiert und einem zweiten Härter, der abreagiert hat. Es werden demnach vorvernetzte (Engl.: Precured) Epoxy-Tapes offenbart. Diese sind jedoch bei Raumtemperatur nicht lagerstabil (Lagerung bei -30°C, beschrieben in Absatz [0084]).

Die WO 93/14141 A1 offenbart eine Epoxidzusammensetzung, welche ein Reaktionsprodukt aus einem Epoxid und einem mit Amin verkappten Oligomer, ein Epoxidaddukt einer Dimersäure und ein Katalysatorsystem zur Homopolymerisation der Epoxide umfasst, wobei die gehärtete Epoxidzusammensetzung zwei unterschiedliche Glasübergangstemperaturen aufweist.

**Aufgabe**

Aufgabe der Erfindung ist es daher, ein Klebeband mit vorvernetzer Epoxid-Haftklebemasse zur Verfügung zu stellen, die eine gute Lagerstabilität bei Raumtemperatur (23°C) aufweist, insbesondere über 2 Monate. Ferner sollen die Klebebänder bevorzugt dazu geeignet sein während eines vertikalen Vernetzungsschrittes die Substrate in Position halten.

**Lösung**

Gelöst wurde die Aufgabe der vorliegenden Erfindung durch die spezifische Epoxid-Haftklebemasse, insbesondere durch die Verwendung von spezifischen Polyetheraminen als einer der Härter und zudem, dass der Epoxidumsatz in einem bestimmten Verhältnis zum theoretischen Gelpunkt steht, sowie das Vorliegen eines bestimmten Mischungs-Tg für das Epoxidharz und Polyetheramin.

Deshalb betrifft die Erfindung in einem ersten Aspekt ein Verfahren zur Herstellung einer vorvernetzten Haftklebemasse durch in-Kontakt-bringen und anschließendem Vermischen der folgenden Komponenten:

a) mindestens ein Polyetheramin, welches mindestens zwei endständige -NH$_2$ Gruppen, bevorzugt zwei oder drei endständige -NH$_2$ Gruppen, enthält und in alpha-Stellung zu mindestens einer -NH$_2$ Gruppe, bevorzugt allen -NH$_2$ Gruppen, mindestens einen Alkylrest, bevorzugt einen Methyl-, Ethyl-, oder -Propylrest, enthält;
b) mindestens ein Epoxidharz;
c) mindestens einen, von a) verschiedenen Härter;
d) gegebenenfalls mindestens einen Beschleuniger;
e) gegebenenfalls mindestens ein Additiv; wobei

der Epoxidumsatz $U_{epoxy}$ = 0,85 $\alpha_{gel}$ bis 1,3 $\alpha_{gel}$ beträgt und $\alpha_{gel}$ der Gelpunkt der Zusammensetzung ist; und der Mischungs-Tg der Komponenten a) und b) unter 0 °C liegt.

In einem zweiten Aspekt betrifft die Erfindung eine vorvernetzte Haftklebemasse, erhältlich nach einem Verfahren der vorliegenden Erfindung.

In einem dritten Aspekt betrifft die Erfindung ein Klebeband umfassend die vorvernetzte Haftklebemasse gemäß der vorliegenden Erfindung.

In einem vierten Aspekt betrifft die Erfindung die Verwendung des Klebebands der vorliegenden Erfindung zum Fixieren von Punkthaltern.

In einem fünften Aspekt betrifft die Erfindung die Verwendung des Klebebands der vorliegenden Erfindung zum Fixieren von Gegenständen im Automobil.

In einem sechsten Aspekt betrifft die Erfindung eine härtbare Zusammensetzung, umfassend

a) mindestens ein Polyetheramin, welches mindestens zwei endständige -$NH_2$ Gruppen enthält und in alpha-Stellung zu mindestens einer-$NH_2$ Gruppe mindestens einen Alkylrest enthält;

b) mindestens ein Epoxidharz;

c) mindestens einen, von a) verschiedenen Härter;

d) gegebenenfalls mindestens einen Beschleuniger;

e) gegebenenfalls mindestens ein Additiv, wobei

der Mischungs-Tg der Komponenten a) und b) unter 0 °C liegt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindung bezieht sich diese Angabe nicht auf die absolute Menge an Molekülen sondern auf die Art des Bestandteils. "Mindestens ein Härter" bedeutet daher beispielsweise ein oder mehrere verschiedene Arten von Härter und betrifft nicht die Anzahl einer einzelnen Art von Härter in der Zusammensetzung.

Zahlenwerte, die hierin ohne Dezimalstellen angegeben sind, beziehen sich jeweils auf den vollen angegebenen Wert mit einer Dezimalstelle. So steht beispielsweise "99%" für "99,0%".

Der Ausdruck "ungefähr" oder "etwa", in Zusammenhang mit einem Zahlenwert, bezieht sich auf eine Varianz von $\pm 10\%$ bezogen auf den angegebenen Zahlenwert, vorzugsweise $\pm 5\%$, besonders bevorzugt $\pm 1\%$.

Der Ausdruck "im Wesentlichen frei von" gemäß der vorliegenden Erfindung ist so zu verstehen, dass die jeweilige Verbindung in so geringen Mengen vorhanden ist, dass sie keinen negativen Einfluss auf die Zusammensetzung hat, insbesondere ist die jeweilige Verbindung in weniger als 0,5 Gew.-%, bevorzugt 0,1 Gew.-%, noch stärker bevorzugt 0,01 Gew.-% bezogen auf das Gesamtgewicht der Zusammensetzung in der Zusammensetzung enthalten. Insbesondere ist die jeweilige Verbindung gar nicht in der Zusammensetzung enthalten.

Die Viskosität wird erfindungsgemäß wie folgt als dynamische Viskosität bestimmt. Die dynamische Viskosität kann nach DIN 53019-1-2008-09 bestimmt werden. Die Viskosität wird in einem Zylinderrotationsviskosimeter mit einer Standardgeometrie nach DIN 53019-1-2008-09 bei einer Messtemperatur von 23 °C und einer Schergeschwindigkeit 1 $\times$ s$^{-1}$ gemessen.

Die Erweichungstemperatur wird erfindungsgemäß nach der einschlägigen Methodik durchgeführt, die als Ring and Ball bekannt ist und nach ASTM E28-18 standardisiert ist. Zur Bestimmung der Klebharzerweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt. Der resultierende Probekörper wird samt Zylinder in die Probehalterung des HRB 754 eingelegt. Zur Befüllung des Temperierbads wird Glycerin verwendet, sofern die Klebharzerweichungstemperatur zwischen 50 °C und 150 °C liegt. Bei niedrigeren Klebharzerweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Klebharzerweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Klebharzerweichungstemperatur ist der Mittelwert aus den beiden Einzelmessungen.

Die Bestimmung der statischen Glasübergangstemperatur Tg erfolgt über Dynamische Differenzkalorimetrie nach DIN 53765:1994-03. Hierzu werden ungefähr 7 mg der Probe in einen Aluminiumtiegel genau eingewogen und anschließend in das Messgerät (Gerät: DSC 204 F1, Fa. Netzsch) eingebracht. Als Referenz wird ein leerer Tiegel benutzt. Anschließend werden zwei Aufheizkurven mit einer Aufheizrate von 10 K/min aufgenommen. Die Angaben zur Glasübergangstemperatur Tg beziehen sich auf den Glasumwandlungstemperatur-Wert Tg nach DIN 53765:1994-03 der zweiten Aufheizkurve, sofern im Einzelfall nichts anderes angegeben ist.

Angaben zur zahlenmittleren Molmasse Mn beziehungsweise zur gewichtsmittleren Molmasse Mw werden ermittelt durch Messung mittels Gelpermeationschromatographie (GPC). Es wurde gegen Polystyrol-Standards gemessen.

Das Epoxid-Äquivalentgewicht (EEW) der jeweiligen Komponente wird bevorzugt nach DIN EN ISO 3001:1999-11 bestimmt.

Das Aminäquivalentgewicht (AHEW) berechnet sich aus dem Molekulargewicht $M_n$ und der Anzahl an amini-schen Wasserstoffen (-NH oder-$NH_2$) $H_{eq}$ der jeweiligen Verbindung wie folgt:

AHEW = $M_n$ / $H_{eq}$. Beträgt beispielsweise das Molekulargewicht eines Amins 1000g/mol und trägt das Molekül 2 -$NH_2$-Gruppen ($H_{eq}$ = 4Äquivalente), so ergibt sich ein AHEW = 250 g/eq.

Weitere Referenzmethoden ergeben sich aus der folgenden Beschreibung, insbesondere den Testmethoden im experimentellen Teil.

Die im Folgenden beschriebenen bevorzugten Ausführungsformen für die einzelnen Komponenten a) bis e) können auf alle sechs Aspekte der vorliegenden Erfindung angewendet werden.

Diese und weitere Aspekte, Ausführungsformen, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist.

Die Erfindung betrifft insbesondere ein Verfahren zur Herstellung einer vorvernetzten Haftklebemasse durch in-Kontakt-bringen und anschließendem Vermischen der folgenden Komponenten:

a) mindestens ein Polyetheramin, welches mindestens zwei endständige -NH$_2$ Gruppen, bevorzugt zwei oder drei endständige -NH$_2$ Gruppen, enthält und in alpha-Stellung zu mindestens einer -NH$_2$ Gruppe, bevorzugt allen -NH$_2$ Gruppen, mindestens einen Alkylrest, bevorzugt einen Methyl-, Ethyl-, oder -Propylrest, enthält;
b) mindestens ein Epoxidharz;
c) mindestens einen, von a) verschiedenen Härter, insbesondere latenten Härter;
d) gegebenenfalls mindestens einen Beschleuniger, insbesondere latenten Beschleuniger; und
e) gegebenenfalls mindestens ein Additiv; wobei

der Epoxidumsatz $U_{epoxy}$ = 0,85 $\alpha_{gel}$ bis 1,3 $\alpha_{gel}$ beträgt und $\alpha_{gel}$ der Gelpunkt der Zusammensetzung ist; und der Mischungs-Tg der Komponenten a) und b) unter 0 °C liegt.

Das mindestens eine Polyetheramin weist dabei bevorzugt ein gewichtsmittleres Molekulargewicht von 150 bis 6000 g/mol, bevorzugt 200 bis 3000 g/mol auf.

Geeignete Polyetheramine sind beispielsweise von der Firma Huntsman Corp. unter dem Handelsnamen Jeffamine® kommerziell erhältlich. Insbesondere sind Jeffamine® der D-Serie, T-Serie, ED-Serie und XTJ-Serie geeignet. Um den Anteil der Amine in der Abmischung möglichst niedrig zu halten sind Polyetheramine mit niedrigem Aminäquivalentgewicht (AHEW) kleiner 1000 g/eq bevorzugt. Diese sind beispielsweise kommerziell unter den Handelsnamen Jeffamine® D-205, D-230, D-400, D-2000, D-2010, ED-600, ED-900, ED-2003, T-403, T-3000, THF-100 erhältlich. Insbesondere bevorzugt sind trifunktionelle Polyetheramine der T-Serie, wie Jeffamine® T-403 und Jeffamine® T-3000, ganz besonders geeignet ist Jeffamine® T-3000.

In einer bevorzugten Ausführungsform ist das mindestens eine Polyetheramin a) in 1 bis 40 Gew.-%, basierend auf dem Gesamtgewicht von a) und b) enthalten. In einer stärker bevorzugten Ausführungsform ist das mindestens eine Polyetheramin in 1 bis 15 Gew.-%, basierend auf dem Gesamtgewicht von a) und b) enthalten, insbesondere wenn das mindestens eine Polyetheramin ein Aminäquivalentgewicht (AHEW) kleiner 1000 g/eq aufweist. In einer alternativen stärker bevorzugten Ausführungsform ist das mindestens eine Polyetheramin in 10 bis 40 Gew.-%, basierend auf dem Gesamtgewicht von a) und b) enthalten, insbesondere wenn es sich um difunktionelle Polyetheramine handelt.

Als mindestens ein Epoxidharz sind generell alle dem Fachmann auf dem Gebiet der Haftklebemassen bekannten Epoxidharze geeignet. Sie können aromatischer oder insbesondere aliphatischer oder cycloaliphatischer Natur sein.

Das eine Epoxidharz beziehungsweise die mehreren Epoxidharze können die einzigen verwendeten Reaktivharze sein, insbesondere also die einzigen Komponenten, die mit Härtern - gegebenenfalls nach entsprechender Aktivierung - zu einer Aushärtung der Zusammensetzung führen können. Grundsätzlich ist es aber auch möglich, dass neben dem Epoxidharz beziehungsweise neben den Epoxidharzen weitere Reaktivharze, die keine Epoxidharze sind, zugegen sind.

Als Epoxidharz b) werden beispielsweise und vorteilhaft ein oder mehrere elastomermodifizierte, insbesondere nitrilkautschukmodifizierte, Epoxidharze und/oder ein oder mehrere silanmodifizierte Epoxidharze und/oder ein oder mehrere fettsäuremodifizierte Epoxidharze eingesetzt.

Als Epoxidharze werden im Rahmen dieser Schrift insbesondere solche mit mehr als einer EpoxidGruppe pro Molekül bezeichnet, also solche Reaktivharze, bei denen die funktionellen Gruppen oder zumindest ein Teil der funktionellen Gruppen Epoxidgruppen sind. Die Umwandlung der Epoxidharze während der Härtungsreaktion der härtbaren Zusammensetzung erfolgt insbesondere über Polyadditionsreaktionen mit geeigneten Epoxid-Härtern beziehungsweise durch Polymerisation über die Epoxid-Gruppen. Je nach Wahl des Epoxid-Härters können auch beide Reaktionsmechanismen parallel stattfinden.

In einer Ausführungsform weist das mindestens eine Epoxidharz einen Tg von -100 bis 60 °C, bevorzugt -50 bis 40 °C, auf.

In einer Ausführungsform weist das mindestens eine Epoxidharz eine mittlere Funktionalität von 2 bis 15, bevorzugt 2 bis 7, auf.

In einer Ausführungsform weist das mindestens eine Epoxidharz eine Erweichungstemperatur von mindestens 45°C auf. Die ist insbesondere der Fall bei Ausführunformen in denen der Anteil an niedrig-viskosem Polyetheramin in der Mischung größer wird.

In einer Ausführungsform weist das mindestens eine Epoxidharz oder mindestens ein enthaltenes Epoxidharz eine Viskosität bei 25°C von mindestens 20 Pa*s, bevorzugt 50 Pa*s, stärker bevorzugt 150 Pa*s auf.

In einer Ausführungsform sind mindestens ein, bevorzugt zwei, bei 23°C flüssige(s) Epoxidharz(e) und mindestens ein bei 23°C festes Epoxidharz enthalten.

Epoxidgruppenhaltige Materialien bzw. Epoxidharze, die in den Zusammensetzungen der Erfindung nützlich sind, sind beliebige organische Verbindungen mit wenigstens einem Oxiranring, die durch eine Ringöffnungsreaktion polymerisierbar sind. Solche Materialien, die allgemein als Epoxide bezeichnet werden, umfassen sowohl monomere als auch polymere Epoxide und können aliphatisch, cycloaliphatisch oder aromatisch sein. Diese Materialien weisen bevorzugt im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert. Die polymeren Epoxide umfassen lineare Polymere mit endständigen Epoxidgruppen (z.B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Das Molekulargewicht des epoxidhaltigen Materials kann von 58 bis etwa 100.000 g/mol oder mehr variieren. Mischungen aus verschiedenen epoxidhaltigen Materialien können auch verwendet werden. Nützliche epoxidhaltige Materialien umfassen jene, die Cyclohexenoxidgruppen, wie die Epoxycyclohexancarboxylate, die durch 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylmethyl)adipat exemplifiziert sind, enthalten. Für eine detailliertere Liste von nützlichen Epoxiden dieser Art wird auf U.S. Patent Nr. 3,117,099 verwiesen.

Weitere epoxidhaltige Materialien, die bei der Anwendung dieser Erfindung besonders nützlich sind, umfassen Glycidylethermonomere. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in U.S. Patent Nr. 3,018,262 beschrieben. Außerdem sind epoxidhaltige Materialien umfasst, die erhalten werden, indem obengenannte Rohstoffe mit Fettsäuren modifiziert werden, insbesondere dimere Fettsäuren.

Es gibt eine Vielzahl an im Handel erhältlichen epoxidhaltigen Materialien, die in dieser Erfindung bevorzugt verwendet werden können. Insbesondere umfassen Epoxide, die leicht erhältlich sind, Octadecylenoxid, Epichlorhydrin, Styroloxid, Vinylcyclohexenoxid, Glycidol, Glycidylmethacrylat, Diglycidylether von Bisphenol A (z.B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z.B. ARALDITE GY281 von Ciba-Geigy), Vinylcyclohexendioxid (z.B. ERL 4206 von Union Carbide Corp.), 3,4-Ep-oxycyclohexylmethyl-3,4-epoxycyclohexencarboxylat (z.B. ERL-4221 von Union Carbide Corp.), 2-(3,4-Epo-xycyclohexyl-5,5-spiro-3,4-epoxy)cyclohexan-metadioxan (z.B. ERL-4234 von Union Carbide Corp.), Bis(3,4-epoxycyclohexyl)adipat (z.B. ERL-4299 von Union Carbide Corp.), Dipentendioxid (z.B. ERL-4269 von Union Carbide Corp.), epoxidiertes Polybutadien (z.B. OXIRON 2001 von FMC Corp.), silikonharzhaltige Epoxidfunktionalität, Epoxysilane (z.B. beta-(3,4-Epoxycyclohexyl)ethyltrimethoxysilan und gamma-Glycidoxypropyltrimethoxysilan, im Handel erhältlich von Union Carbide), feuerhemmende Epoxidharze (z.B. DER-542, ein bromiertes bisphenolartiges Epoxidharz, erhältlich von Dow Chemical Co.), 1,4-Butandioldiglycidylether (z. B. ARALDITE RD-2 von Ciba-Geigy), hydrierte, auf Bisphenol A-Epichlorhydrin basierende Epoxidharze (z. B. EPONEX 1510 von Shell Chemical Co.) und Polyglycidylether von Phenolformaldehyd-Novolak (z.B. DEN-431 und DEN-438 von Dow Chemical Co.).

Besonders bevorzugt werden als Epoxidharze - insbesondere vorteilhaft in Kombination mit einem oder mehreren elastomermodifizierte und/oder silanmodifizierte und/oder fettsäuremodifizierte Epoxidharze eingesetzt.

Als elastomermodifizierte Epoxide im Sinne der vorliegenden Erfindung sind - insbesondere flüssige, in der Regel hochviskose - Epoxide mit einer mittleren Funktionalität von mindestens zwei und einem Elastomergehalt von bis zu 50 Gew.-%, vorzugsweise mit einem solchen von 5 bis 40 Gew.-%, zu verstehen. Die Epoxidgruppen können endständig und/oder in der Seitenkette des Moleküls angeordnet sein. Der elastomere Strukturanteil dieser flexibilisierten Epoxide besteht aus Polyenen, Dienmischpolymeren und Polyurethanen, vorzugsweise aus Polybutadien, Butadien-Styrol- oder Butadien-Acrylnitril-Mischpolymeren.

Ein durch Butadien-Acrylnitril-Copolymere (Nitrilkautschuk) modifizierte Epoxidharz ist beispielweise ein Epoxid-Vorpolymer, das durch Modifizierung eines Epoxidharzes, mit mindestens zwei Epoxidgruppen in den Molekülen, mit einem Nitrilkautschuk erhalten wird. Als Epoxidbasis wird vorteilhaft ein Reaktionsprodukt aus Glycerin oder Propylenglycol und einer halogenhaltigen Epoxidverbindung, wie Epichlorhydrin, oder das Reaktionsprodukt aus einem mehrwertigen Phenol, wie Hydrochinon, Bisphenol-A, und einem halogenhaltigen Epoxid verwendet. Wünschenswert ist ein Reaktionsprodukt aus einem Epoxidharz vom Bisphenol-A-Typ mit zwei endständigen Epoxidgruppen.

Zum Anbinden der Epoxidharze kann im Falle von Butadien-Polymeren oder Butadien-Acrylnitril-Copolymeren (sogenannte Nitrilkautschuke) ein drittes Monomer mit Säurefunktion - zum Beispiel Acrylsäure - mit einpolymerisiert werden, wodurch sogenannte carboxy-terminierte-Nitrilkautschuke (CTBN) erhalten werden. In der Regel enthalten diese Verbindungen nicht nur an den Enden, sondern auch entlang der Hauptkette Säuregruppen. CTBN werden beispielsweise unter dem Handelsnamen Hycar von der Firma B. F. Goodrich angeboten werden. Diese haben Molmassen zwischen 2000 und 5000 g/mol und Acrylnitrilgehalte zwischen 10 % und 30 %. Konkrete Beispiele sind Hycar CTBN 1300 × 8, 1300 × 13 oder 1300 × 15. Entsprechend verläuft die Reaktion mit Butadien-Polymeren.

Durch Reaktion von Epoxidharzen mit CTBN werden sogenannte epoxy-terminierte-Nitrilkautschuke (ETBN) erhalten, die für diese Erfindung besonders bevorzugt verwendet werden. Kommerziell sind solche ETBN beispielsweise von der Firma Emerald Materials unter dem Namen HYPRO ETBN (vorher Hycar ETBN) - wie beispielsweise Hypro 1300X40 ETBN, Hypro 1300X63 ETBN und Hypro 1300X68 ETBN - erhältlich. Ein Beispiel für einen epoxy-terminierten Butadienkautschuk ist Hypro 2000X174 ETB.

Weitere Beispiele für elastomer-modifizierte epoxy-funktionale Verbindungen sind ein Reaktionsprodukt eines Diglycidylethers von Neopentylalkohol und eines Butadien/Acrylnitril-Elastomers mit Carboxylenden (z. B. EPONTM Resin 58034 von Resolution Performance Pro-ducts LLC), ein Reaktionsprodukt eines Diglycidylethers von Bisphenol-A und eines Butadi-en/Acrylnitril-Elastomers mit Carboxylenden (z. B. EPONTM Resin 58006 von Resolution Performance Products LLC), ein Butadien/Acrylnitril-Elastomer mit Carboxylenden (z. B. CTBN-1300X8 und CTBN-1300X13 von Noveon, Inc., Cleveland, Ohio) und ein Butadien/Acrylnitril-Elastomer mit Aminenden (z. B. ATBN-1300X16 und ATBN-1300X42 von Noveon, Inc.). Ein Beispiel für das elastomer-modifizierte Epoxidharzaddukt ist das Reaktionsprodukt eines Epoxidharzes auf Bisphenol-F-Basis und eines Butadien/Acrylnitril-Elastomers mit Carboxylenden (z. B. EPONTM Resin 58003 von Resolution Performance Products LLC).

Der Anteil der elastomer-modifizierten Epoxidharze bezogen auf die Gesamtmenge an Epo-xidharzen kann zwischen 0 und 100 Gew.-% liegen. Für Verklebungen mit besonders hohen Verklebungsfestigkeiten und geringer Dehnung werden eher niedrigere Anteile - wie beispielsweise 0 bis 15 Gew.-% - gewählt. Im Gegensatz dazu werden Klebstoffe mit hohen Dehnungswerten erhalten, wenn der Anteil größer 40 Gew.-%, insbesondere größer 60 Gew.-% ist. Für viele Anwendungen ist ein ausgewogenes Verhältnis zwischen Verklebungsfestigkeit und Dehnung gewollt. Hier sind Anteile zwischen 20 bis 60 Gew.-%, insbesondere 30 bis 50 Gew.-% bevorzugt. Je nach Anforderungsprofil kann es auch vorteilhaft sein, Klebstoffe mit einem Anteil bis 100 % zu realisieren.

Um im Vorvernetzungschritt eine ausreichende Vernetzung zu erzielen, werden bevorzugt Epoxidharze eingesetzt, die eine Funktionalität von mindestens 2 besitzen ($f \geq 2$). Die Zugabe von Epoxidharzen mit höherer Funktionalität ($f > 2$) ist hilfreich, um eine Vorvernetzung zu erzielen und den Umsatz möglichst niedrig zu halten, was für eine gute Haftklebrigkeit wichtig ist. Häufig sind diese höherfunktionellen Harze Feststoffe, wie z.B. Epoxynovolake.

Alternativ können flüssige höherfunktionelle Epoxidharze bis zu 100 Gew.-% der Epoxidharzmischung betragen.

Um gute Verklebungseigenschaften der ausgehärteten Klebmasse zu erzielen sind bevorzugt nicht mehr als 70 Gew-% an flüssigen Epoxidharzen enthalten. Eine bevorzugte Menge an höherfunktionellen festen Harzen im Epoxidharzgemisch beträgt zwischen 10 Gew.-% und 70 Gew.-%, insbesondere weniger als 50%. Werden monofunktionelle Epoxidharze wie beispielsweise Butylglycidylether, Cresylglycidylether oder andere Alkylglycidylether verwendet, so ist deren Anteil an der Gesamtmenge an Epoxidharzen nicht größer als 15 Gew.-%, bevorzugt 10 Gew.-%, insbesondere weniger als 5 Gew.-% bezogen auf das Gesamtgewicht der enthaltenen Epoxidharze.

In einer bevorzugten Ausführungsform ist das mindestens eine Epoxidharz b) in 60 bis 99 Gew.-%, basierend auf dem Gesamtgewicht von a) und b) enthalten. In einer stärker bevorzugten Ausführungsform ist das mindestens eine Epoxidharz in 85 bis 99 Gew.-%, basierend auf dem Gesamtgewicht von a) und b) enthalten, insbesondere wenn das mindestens eine Polyetheramin ein Aminäquivalentgewicht (AHEW) kleiner 1000 g/eq aufweist. In einer alternativen stärker bevorzugten Ausführungsform ist das mindestens eine Epoxidharz in 60 bis 90 Gew.-%, basierend auf dem Gesamtgewicht von a) und b) enthalten, insbesondere wenn es sich bei a) um difunktionelle Polyetheramine handelt.

Ferner ist mindestens ein weiterer, vom Polyetheramin verschiedener, Härter c) enthalten. Das Polyetheramin wirkt dabei als erster Härter (Vorvernetzer) bei der ersten Vernetzung. Geeignete (latente) Härter c) reagieren im Wesentlichen nicht im Vorvernetzungsschritt, also in der ersten Vernetzung.

Solche Härter c) werden im Rahmen dieser Schrift entsprechend DIN 55945: 1999-07 die - als Bindemittel wirkende(n) - chemische(n) Verbindung(en) bezeichnet, die den vernetzbaren Harzen zugesetzt wird (werden), um die finale Härtung (Vernetzung) der härtbaren Zusammensetzung, insbesondere in Form eines applizierten Films, zu bewirken. Die Zusammensetzungen der vorliegenden Erfindungen können zudem gegebenenfalls mindestens einen Beschleuniger enthalten.

Als (latenten) Beschleuniger d) werden im Rahmen dieser Schrift solche chemischen Verbindungen bezeichnet, die bei Anwesenheit eines anderen Härters c) die Reaktionsgeschwindigkeit der Härtungsreaktion und/oder die Geschwindigkeit der Aktivierung der Härtung der Epoxidharze insbesondere im Sinne eines Synergismus erhöhen.

Härtungsreaktionen sind in der dynamischen Differenzkaloriemetrie (DSC) grundsätzlich als exothermer Peak identifizierbar. Dabei wird das Messverfahren nach DIN 53765:1994-03 verwendet. Die Temperatur am Maximum dieses exothermen Peaks bei einer verwendeten Aufheizrate von 10K/min wird als $T_{peak}$ bezeichnet.

Als Beschleuniger sind insbesondere solche Verbindungen zu verstehen, deren Zugabe den Härtungspeak eines bestimmten Härters zu niedrigeren Temperaturen verschiebt.

Mit dem Begriff Härtungsreagenz wird - im Unterschied zu den einzelnen Härtern und Beschleunigern - die Gesamtheit der eingesetzten Härter und gegebenenfalls Beschleuniger für die Härtungsreaktion mittels der korrespondieren reaktiven Komponente (dem beziehungsweise den entsprechenden Reaktivharz(en)) bezeichnet. Das Härtungsreagenz kann in der vorliegenden Erfindung dementsprechend insbesondere aus einem oder aus mehreren Härtern und dem Polyetheramin oder aus einem oder mehreren Härtern und dem Polyetheramin in Gegenwart eines oder mehrerer Beschleuniger gebildet werden.

Als Härter c) können insbesondere vorteilhaft Verbindungen aus der folgenden Liste aus Dicyandiamid, Anhydriden, Epoxy-Amin-Addukten, Phenolnovolake, Cresolnovolake, Hydraziden und Reaktionsprodukten aus Disäuren und multifunktionellen Aminen gewählt werden. Als Reaktionsprodukte aus Disäuren und multifunktionellen Aminen kommen beispielsweise Reaktionsprodukte aus Phthalsäure und Diethylentriamin in Betracht. In einer sehr bevorzugten Ausführung der Erfindung umfasst das Härtungsreagenz Dicyandiamid sowie eine oder mehrere Imidazolverbindungen (z.B. ausgewählt aus der Curezol-Serie erhältlich von Evonik Industries AG).

In einer bevorzugten Ausführungsform ist der mindestens eine von a) verschiedene Härter c) ausgewählt aus Dicyandiamiden, Phenolnovolaken, Cresolnovolaken, Anhydriden, Epoxy-Amin-Addukten, Hydraziden oder Mischungen davon.

In einer Ausführungsform weist der mindestens eine von a) verschiedene Härter c) einen $T_{peak}$ ermittelt mit DSC wie vorstehend beschrieben, von mehr als 60 °C, bevorzugt mehr als 80 °C, insbesondere mehr als 100°C auf.

In einer bevorzugen Ausführungsform wird der Anteil des mindestens einen weiteren, von a) verschiedenen, Härters c) über das Epoxidäquivalentgewicht (EEW) der Epoxidmischung und des Aminäquivalentgewichtes (AHEW) bestimmt. Hier hat sich gezeigt, dass insbesondere bei der Verwendung von Dicyandiamid als Härter mindestens 90% der theoretisch benötigten Aminmenge bevorzugt sind, jedoch auch deutlich über die equimolare Menge z.B. 130%, 150% oder 200% verwendet werden können.

Stöchimetrische Härter wie beispielsweise Dicyandiamid werden bevorzugt auf die Epoxidmenge des Klebstoffes bezogen eingesetzt. Dazu wird zunächst der EEW der Epoxidmischung nach folgender Formel berechnet:

$$EEW_{ges} = \dfrac{m_{ges}}{\sum \dfrac{m_i}{EEW_i}}$$

wobei

$m_{ges}$ = Summe $m_i$
$m_i$ Massen der einzelnen Komponenten i der Mischung
$EEW_i$ = Epoxyäquivalente der Komponenten i

Die Härtermenge $m_H$ ergibt sich dann aus dem Aminäquivalent des Härters (AHEW) und dem $EEW_{ges}$ der Epoxidmischung wie folgt:

$$m_H = AHEW * ( m_i / EEW_{ges} )$$

Bei der Berechnung ist die verwendete Menge an Polyetheramin a) zu berücksichtigen, da diese bereits einen Teil der Epoxidgruppen umsetzt, sodass sich eine reduzierte Härtermenge für c) ergibt. An einem Beispiel ist dies gezeigt: Zur Vorvernetzung wird ein Epoxidumsatz von 15% erzielt und entsprechende Menge Polyetheramin eingesetzt. Die Menge an Härter reduziert sich entsprechend um 15%.

Für Epoxy-Amin Addukte ist es bevorzugt, dass bezogen auf das Gewicht des mindestens einen Epoxidharz b) zwischen 10 Gew.-% und 30 Gew.-% an c) eingesetzt werden.

In einer Ausführungsform wird der Beschleuniger d) ausgewählt aus Harnstoffderivaten, welche beispielsweise unter dem Handelsnamen Dyhard UR von Alzchem vertrieben werden, oder Imidazolen, wie beispielsweise unter dem Handelsnamen Curezol von Evonik Industries AG erhältlich, oder Epoxy-Amin-Addukten, wie sie von Ajinomoto unter dem Handelsnamen Ajicure vertrieben werden. Besonders bevorzugte Harnstoffderivate sind Dimethylharnstoffderivate wie z.B. Dyhard UR500 oder Dyhard UR700. Bevorzugte Imidazole, die eine ausreichende Lagerstabilität ergeben, sind beispielsweise in der WO 2019101918 A1 beschrieben und explizit als bevorzugte Verbindungen hier aufgezählt. Geeignete Epoxy-Amin-Addukte sind in der US 6,838,170 B2 unter dem Oberbegriff "adducts" offenbart, sowie in der US 9,589,693 B2 unter dem Begriff "amine-epoxy adducts".

In einer bevorzugten Ausführungsform, wird der mindestens eine Beschleuniger werden bezogen auf das Gewicht des mindestens einen Epoxidharz b) 0,25 Gew.-% und 5 Gew.-% eingesetzt.

Ferner kann gegebenenfalls mindestens ein Additiv, welches von den Komponenten a) bis d) verschieden ist enthalten sein. Dabei sind alle dem Fachmann auf dem Gebiet der Haftklebemassen bekannten Additive geeignet.

Beispielsweise sind die Additive ausgewählt aus Polymeren, Harzen, Farbstoffe und Feststoffe zur Einstellung der elektrischen oder thermischen Leitfähigkeit oder Mischungen davon.

In einer Ausführungsform ist das mindestens eine Additiv in 0,001 bis 5 Gew.-%, bevorzugt 0,01 bis 3 Gew.-%, basierend auf dem Gesamtgewicht von Komponenten a) bis c) enthalten.

Generell sind alle dem Fachmann auf dem Gebiet der Haftklebemassen bekannten Additive geeignet. Diese können beispielsweise ausgewählt werden aus Rheologiemodifizierer, Schäumungsmittel, Füllstoffe oder Adhäsionsvermittler.

Ferner sind als weitere Additive folgende Verbindungen geeignet:

- Plastifizierungsmittel wie zum Beispiel Weichmacheröle, oder niedermolekulare flüssige Polymere, wie zum Beispiel niedermolekulare Polybutene, vorzugsweise mit einem Anteil von 0,2 bis 5 Gew.-% bezogen auf das Gesamtgewicht der Haftklebemasse

- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse

- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse

- Prozessstabilisatoren wie zum Beispiel C-Radikalfänger, vorzugsweise mit einem Anteil von 0,2 bis 1 Gew.-% bezogen auf das Gesamtgewicht der Haftklebemasse

- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasse

- Verarbeitungshilfsmittel, vorzugsweise mit einem Anteil von 0,2 bis 1 Gew.-% bezogen auf das Gesamtgewicht der Haftklebemasse

- gegebenenfalls weitere Polymere von bevorzugt elastomerer Natur; vorzugsweise mit einem Anteil von 0,2 bis 10 Gew.-% bezogen auf das Gesamtgewicht der Haftklebemasse.

Sollen größere Spaltmaße überbrückt werden, so kann die Haftklebmasse geschäumt vorliegen oder im Aushärteschritt des 2. Härters erfolgen. Die Schäumung kann mittels beliebiger chemischer und/oder physikalischer Methoden erfolgen. Bevorzugt wird eine geschäumte erfindungsgemäße Haftklebemasse jedoch durch das Einbringen und nachfolgende Expandieren von Mikroballons erhalten.

Um die erfindungsgemäßen vorvernetzen Haftklebemassen zu erhalten, liegt ein bestimmter Epoxidumsatz $U_{epoxy}$ vor. Der Epoxidumsatz beträgt $U_{epoxy} = 0{,}85\,\alpha_{gel}$ bis $1{,}3\,\alpha_{gel}$, bevorzugt $U_{epoxy} = 0{,}9\,\alpha_{gel}$ bis $1{,}3\,\alpha_{gel}$, insbesondere $U_{epoxy} = 0{,}95\,\alpha_{gel}$ bis $1{,}3\,\alpha_{gel}$.

Der Gelpunkt $\alpha_{gel}$ wird nach folgender Gleichung berechnet:

$$\alpha_{gel} = \frac{1}{(f_{Amin} - 1)(f_{Epoxy} - 1)}$$

$f_{Amin}$ = Funktionalität der Amine
$f_{Epoxy}$ = Funktionalität der Epoxidharze.

Werden Mischungen von Epoxidharzen oder Aminen verwendet, so berechnet sich die Funktionalität einer Mischung über folgende Formel:

$$f_{Epoxymischung} = \frac{(n_1 \cdot f_1) + (n_2 \cdot f_2) + \cdots}{n_1 + n_2 + \cdots} \text{ bzw. } f_{Aminmischung} = \frac{(n_1 \cdot f_1) + (n_2 \cdot f_2) + \cdots}{n_1 + n_2 + \cdots}$$

wobei $n_i$ die jeweilige Stoffmenge von Epoxid i bzw. Amin i und $f_i$ die jeweilige Funktionalität von von Epoxid i bzw. Amin i bezeichnet.

In diesen Fällen berechnet sich der theoretische Gelpunkt nach folgender angepasster Gleichung von oben:

$$\alpha_{gel} = \frac{1}{(f_{Aminmischung} - 1)(f_{Epoxymischung} - 1)}$$

Ferner liegt der Mischungs-Tg der Komponenten a) und b) unter 0 °C.

Der Mischungs-Tg wird dabei über die Fox-Gleichung bestimmt:

$$\frac{1}{T_g} = \frac{w_1}{T_{g1}} + \frac{w_2}{T_{g2}} \ldots$$

wobei $w_1$, $w_2$, ... die jeweiligen Gewichtsteile der entsprechenden Bestandteile der Mischung und ihren jeweiligen Glasübergangstemperaturen $T_{g1}$, $T_{g2}$, ... entspricht.

Das Verfahren kann in einem Mischer durchgeführt werden. In einer Ausführungsform werden die Komponenten gemeinsam vor dem Vermischen erwärmt, bevorzugt auf 40 bis 100 °C, insbesondere für 1 bis 30 Minuten. In einer Ausführungsform werden die Komponenten während des Vermischens erwärmt, bevorzugt auf 40 bis 80 °C, insbesondere für 1 bis 30 Minuten. In einer Ausführungsform wird die Zugabe des mindestens einen Härters c) und/oder des mindestens einen Beschleunigers d) am Ende des Mischprozesses bei Temperaturen von weniger als 80°C, bevorzugt weniger als 60°C, durchgeführt.

Mit dem Verfahren der vorliegenden Erfindung werden vorvernetzte Haftklebemassen erhalten.

Ferner betrifft die Erfindung Klebebänder die die vorvernetzten Haftklebemassen der vorliegenden Erfindung umfassen.

In einer Ausführungsform weist die Haftklebemasse eine Schichtdicke von 20 bis 4000 $\mu$m auf. In einer bevorzugten Ausführungsform beträgt die Schichtdicke 20 bis 150 $\mu$m. Dadurch sind die Klebebänder für den Elektronikbereich geeignet. In einer alternativen bevorzugten Ausführungsform beträgt die Schichtdicke 200 bis 2000 $\mu$m, insbesondere 400 bis 1000 $\mu$m. Dadurch sind die Klebebänder für den Automobilbereich geeignet.

**Klebeband**

Bei der härtbaren Zusammensetzung des erfindungsgemäßen Klebebandes handelt es sich um die vorvernetzte Klebemasse der vorliegenden Erfindung. Diese sind Reaktivklebstoffe, die chemisch reaktive Systeme umfassen, die durch Aktivierung zu einer Härtungsreaktion führen und besonders hohe Klebkräfte (insbesondere größer 1MPa) zu den Substraten, auf denen sie verklebt werden, ausbilden können.

Mit dem Attribut "haftklebrig" - auch als Bestandteil von Substantiven wie etwa in Haftklebemasse - oder synonym mit dem Attribut "selbstklebrig" - ebenfalls auch als Bestandteil von Substantiven - werden im Rahmen dieser Schrift solche Zusammensetzungen bezeichnet, die bereits unter relativ schwachem Andruck - sofern nicht anders angegeben, bei Raumtemperatur, also 23 °C -eine dauerhafte Verbindung mit dem Haftgrund erlauben und nach Gebrauch im Wesentlichen rückstandsfrei vom Haftgrund wieder abgelöst werden können. Haftklebstoffe werden bevorzugt in Form von Klebebändern eingesetzt. Im Sinne der vorliegenden Erfindung besitzt ein haftklebriges Klebeband eine Klebkraft im unausgehärteten (also vorvernetzten) Zustand von wenigstens 1 N/cm. Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 $\mu$m verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergab sich als Mittelwert aus drei Einzelmessungen.

Haftklebstoffe wirken somit bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Haftklebestoffe beruht auf ihren adhäsiven Eigenschaften und die Wiederablösbarkeit auf ihren kohäsiven Eigenschaften. Haftklebrige Reaktivklebstoffe haben bei Raumtemperatur haftklebrige Eigenschaften (und sind in diesem Zustand insbesondere viskoelastisch), weisen aber bei und nach der Härtung das Verhalten von Reaktivklebstoffen auf.

Erfindungsgemäß wird die vorvernetzte Haftklebemasse film- beziehungsweise schichtförmig als Bestandteil eines Klebebandes verwendet.

Hierzu wird die vorvernetzte Haftklebemasse, als Schicht auf einen permanenten oder einen temporär vorliegenden Träger aufgebracht, insbesondere mit den dem Fachmann bekannten Beschichtungsverfahren. Die Beschichtung des bahnförmigen Materials erfolgt bevorzugt lösemittelfrei, beispielsweise mittels Düsenbeschichtung oder mit einem Mehrwalzenauftragswerk. Besonders effektiv und vorteilhaft kann dies mit einem 2- bis 5-Walzenauftragswerk erfolgen, beispielweise mit einem 4-Walzenauftragswerk erfolgen, so dass die Selbstklebemasse bei Durchgang durch ein oder mehrere Walzenspalte vor Übergabe auf das bahnförmige Material auf die gewünschte Dicke ausgeformt wird. Die Walzen des Auftragswerkes können dabei einzeln temperiert werden, beispielsweise auf Temperaturen von 20 °C bis 150 °C eingestellt werden.

Erfolgt die Beschichtung unter Verwendung von Lösungsmitteln, so werden diese nach dem Beschichtungsschritt in einem geeigneten Trocknungskanal wieder entfernt, sodass das finale bahnförmige Material im Wesentlichen keine Lösungsmittel (insbesondere weniger als 1 Gew.-%, bevorzugt weniger als 0,1 Gew.-%%) enthalten.

Permanente Träger sind insbesondere dauerhafter Bestandteil von ein- oder doppelseitig klebender Klebebänder, bei denen eine beziehungsweise beide der außenliegenden Flächen des Klebebandes durch eine Haftklebemasseschicht gebildet wird. Die Klebstoffschichten können zur besseren Handhabbarkeit mit antiadhäsiven Trennschichten, wie etwa silikonisierten Papieren, abgedeckt sein, die zur Verklebung jeweils entfernt werden.

Der allgemeine Ausdruck "Klebeband" umfasst somit einerseits ein Trägermaterial, welches ein- oder beidseitig mit einer Haftklebemasse versehen ist und gegebenenfalls weitere, dazwischenliegende Schichten aufweisen kann.

Insbesondere umfasst der Ausdruck "Klebeband" im Sinne der vorliegenden Erfindung sogenannte "Transferklebebänder", das heißt Klebebänder ohne permanente Träger, insbesondere einschichtige Klebebänder ohne permanente Träger.

Solche erfindungsgemäßen Transferklebebänder sind vor der Applikation auf einen temporären Träger aufgebracht. Als temporäre Träger dienen dabei insbesondere flexible folienförmige Materialien (Kunststofffolien, Papiere oder dergleichen), die mit einer Trennschicht versehen sind (beispielsweise silikonisiert sind) und/oder anti-adhäsive Eigenschaften aufweisen (sogenannte Trennmaterialien, Liner oder Releaseliner).

Temporäre Träger dienen insbesondere dazu, einschichtige oder ansonsten nicht selbsttragende Klebebänder - die also insbesondere nur aus der Haftklebemassenschicht bestehen - handhabbar zu machen und zu schützen.

Der temporäre Träger ist leicht entfernbar und wird bei der Anwendung entfernt (in der Regel nach Aufbringung der freien Klebebandoberfläche auf das erste Substrat und vor Verklebung der anderen, zunächst abgedeckten Klebebandoberfläche auf dem zweiten Substrat), so dass die Haftklebemassenschicht als doppelseitig klebendes Klebeband genutzt werden kann.

Erfindungsgemäße Transferklebebänder können vor der Applikation auch zwei temporäre Träger aufweisen, zwischen denen die Klebemasse als Schicht vorliegt. Zur Applikation wird dann regelmäßig zunächst ein Liner entfernt, die Haftklebemasse appliziert und dann der zweite Liner entfernt. Die Haftklebemasse kann so direkt zur Verbindung zweier Oberflächen verwendet werden. Derartige trägerlose Transferklebebänder sind erfindungsgemäß besonders bevorzugt. Mit einem solchen erfindungsgemäßen haftklebrigen trägerlosen Transferklebeband wird eine in Positionierung und Dosierung sehr genaue Verklebung ermöglicht.

Es sind auch Klebebänder möglich, bei denen nicht mit zwei Linern, sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Insbesondere unterscheiden sich Klebebänder also - unabhängig davon, ob sie einen Träger aufweisen oder trägerlos, also Transferklebebänder, sind - von Klebmassenschichten, die etwa als Flüssigkleber auf einem Substrat vorliegen, dadurch, dass die Klebebänder selbsttragend sind, also als eigenständiges Produkt gehandhabt werden können. Hierzu weist die Haftklebmassenschicht eine hinreichende Kohäsion auf und/oder die Gesamtheit der das Klebeband bildenden Schichten insbesondere eine hinreichende Stabilität auf.

Klebebänder, die ein- oder beidseitig mit Klebstoffen beschichtet sind, werden am Ende des Herstellungsprozesses zumeist zu einer Rolle in Form einer archimedischen Spirale aufgewickelt oder kreuzgespult. Um bei doppelseitig klebenden Klebebändern zu verhindern, dass die Haftklebemassen miteinander in Kontakt kommen, oder um bei einseitig klebenden Klebebändern eine Verklebung der Haftklebemasse auf dem Träger zu verhindern, können die Klebebänder, sofern nicht bereits auf einem Liner vorliegend, vor dem Wickeln vorteilhaft ein- oder beidseitig mit einem Liner eingedeckt werden, der zusammen mit dem Klebeband aufgewickelt wird. Neben der Abdeckung von ein- oder doppelseitig klebenden Klebebändern werden Liner auch zur Eindeckung von reinen Klebemassen (Transferklebeband) und Klebebandabschnitten (z.B. Etiketten) eingesetzt. Diese Liner sorgen des Weiteren dafür, dass die Haftklebemasse vor der Anwendung nicht verschmutzt wird.

Die finale Aushärtung der erfindungsgemäßen Klebemassen beziehungsweise Klebebänder nach Applikation kann vorteilhaft bei Temperaturen zwischen 120 °C und 200 °C für 10 bis 120 Minuten erfolgen. Die exakten Bedingungen richten sich nach dem verwendeten Härter c) und dem gegebenenfalls verwendeten Beschleuniger d) und der verwendeten Menge an Beschleuniger. Typischerweise werden Beschleuniger zwischen 0,5 phr und 5 phr eingesetzt, wobei phr sich auf die Menge an verwendeten Epoxidharzen bezieht. Beispielhafte Aushärtebedingungen sind 30 Minuten bei 180 °C, 30 Minuten bei 160 °C, 35 Minuten bei 145 °C, 60 Minuten bei 130 °C, 120 Minuten bei 120 °C.

Die Klebebänder der vorliegenden Erfindung finden Verwendung zum Fixieren von Punkthaltern und zum Fixieren von Gegenständen im Automobil, bevorzugt zum strukturellen Verkleben von Blechen.

**Experimenteller Teil**

**Allgemeines Herstellungsverfahren**

Die Rohstoffe der entsprechenden Beispielzusammensetzungen aus Tabelle 1 ohne den Beschleuniger wurden in einen Becher eingewogen und auf 80°C für 5 Minuten erhitzt. Die Mischung wurde dann in einem Speedmixer DAC 600.2 der Firma German Engineering by Hausschild für 5 Minuten bei 2500 upm homogenisiert. Die Zusammensetzung wurde auf 60°C abkühlen gelassen. Anschließend wurde der Beschleuniger zugegeben und erneut für 1 Minute bei 2500 upm homogenisiert. Nach 60 Minuten wurde die bereits leicht vorreagierte Klebmasse auf einen siliconisierten PET-Liner gegossen und mit 100 μm Abstandshaltern zwischen zwei Stahlplatten mit 25 kN zu einem Film gepresst. Die Filme wurden 7d bei 23°C, 50% r.F. zur Vervollständigung des 1. Aushärteschrittes gelagert.

**Verwendete Methoden**

Klebkraftverlust (KK Verlust)

Die Klebkräfte wurden analog ISO 29862:2018-05 (Methode 3) bei 23 °C und 50 % relativer Luftfeuchte bei einer Abzugsgeschwindigkeit von 300 mm/min und einem Abzugswinkel von 180° bestimmt. Die Dicke der Klebstoffschicht betrug dabei jeweils 100 μm. Als Verstärkungsfolie wurde eine geätzte PET-Folie mit einer Dicke von 50 μm verwendet, wie sie von der Fa. Coveme (Italien) erhältlich ist.

Als Substrat wurden Stahlplatten entsprechend der Norm verwendet. Die Verklebung des Messstreifens wurde dabei mittels einer Anrollmaschine mit 4 kg bei einer Temperatur von 23 °C vorgenommen. Die Klebebänder wurden sofort nach der Applikation abgezogen. Der KK-Verlust errechnet sich aus dem KK-Wert gemessen nach Lagerung des Klebefilm bei 23°C/50% r.F. für 2 Monate im Verhältnis zum Frischwert nach 7 Tagen nach Herstellung des Klebefilms (nach Vervollständigung des 1. Aushärteschrittes). Ein KK-Verlust von 100% gibt demnach an, dass der Film soweit ausgehärtet ist, dass er nicht mehr haftklebrig ist.

Slipping

Zur Beurteilung der vertikalen Haltekraft der Klebemassen wurde eine 19 g schwere Stahlplatte mit einer Verklebungsfläche von 2.5 × 2.5 cm auf eine Glasplatte verklebt. Die Position der unteren Kante der Stahlplatte wurde auf der Glasplatte markiert. Der Klebstoff wurde vertikal stehend bei 180°C für 30 Minuten ausgehärtet. Nach dem Abkühlen wurde gemessen, um wie viele Millimeter sich die Stahlplatte bewegt hat.

Verklebungsfestigkeit (Zug-Scherversuch)

Als Kenngröße für die Qualität der erzielten Verklebung wurde die Verklebungsfestigkeit eines nach dem erfindungsgemäßen Verfahren hergestellten, ausgehärteten Verbunds für die unterschiedlichen Klebebänder ermittelt. Es wurde die Verklebungsfestigkeit in einem dynamischen Zugscherversuch in Anlehnung an DIN-EN 1465-2009-07 bei 23 °C und 50 % rF für eine Prüfgeschwindigkeit von 10 mm/min jeweils quantitativ bestimmt (Ergebnisse in $N/mm^2$=MPa). Als Prüfstäbe kamen solche aus Stahl zum Einsatz, welche vor der Verklebung mit Aceton gereinigt wurden. Die Schichtdicken der Klebebänder entsprachen jeweils 100 μm ± 10 μm. Angegeben ist der Mittelwert aus drei Messungen. Gemessen wurden Verklebungen mit ausgehärteten Klebstoffen. Die Aushärtung erfolgte bei 180 °C ± 2 °C für 30 Minuten.

Umsatz Epoxy

Der Umsatz der Epoxy-Amin-Reaktion wurde mit ATR-FT-IR bestimmt. Dazu wurde die Epoxidbande bei 914 $cm^{-1}$ verwendet.

Test auf Vernetzung

Eine vorvernetzte Klebebandprobe (1x1 cm, 100 μm Schichtdicke) wurde für 24 h bei 23 °C in einem Gläschen mit Butanon gelegt. Es erfolgte eine optische Bewertung. War nach der Lösungsmittelbehandlung immer noch eine Probe im Gläschen optisch zu sehen, so war die Probe vernetzt. Löst sich das Klebeband auf oder zerfällt es in viele kleine (teilvernetzte) Partikel, so gilt der Test als nicht vernetzt.

**Beispiele**

Verwendete Rohstoffe:

| | |
|---|---|
| Epiclon 673 | Festes Epoxy-Kresol-Novolak der Firma Die mit einer Erweichungstemperatur 75 bis 79 °C. Mittlere Funktionalität: 5,4 Epoxygruppen / Molekül, EEW = 208 - 212 g/eq. Tg = 30 °C |
| Epikote 828 | Difunktionelles Bisphenol-A / Epichlorhydrin Flüssigepoxid mit einem Gewicht pro Epoxid von 184 bis 190 g/eq der Firma Hexion. Viskosität bei 25 °C von 10 bis 12 Pa s. Mittlere Funktionalität: 2 Epoxygruppen / Molekül. Tg = -16°C. |
| PolyDis PD3611 | Nitrilkautschukmodifiziertes Epoxidharz auf der Basis von Bisphenol-F-diglycidylether mit einem Elastomergehalt von 40 Gew.-% und einem Gewicht pro Epoxid von 550 g/eq der Firma Schill + Seilacher "Struktol". Viskosität bei 25 °C von 10000 Pa s. Mittlere Funktionalität: 2 Epoxygruppen / Molekül. Tg = -10°C. |
| Hypro 1300X45 ATBN | Aminterminiertes Butadienacrylnitrilcopolymer mit 18% Acrylnitrilgehalt. Viskosität bei 27°C von 375 Pa s. Molekulargewicht 3800 g/mol. Tg = - 55°C. Funktionalität = 1,8. Das zur Terminierung verwendete Amin ist N-Aminoethylpiperazin. |
| Jeffamine T403 | Aminterminiertes Propylenoxid mit 3 primären Aminogruppen, die am Nachbarkohlenstoff eine Methylgruppe tragen. Tg = -61°C. Molekulargewicht = 440 g/mol, mittlere Funktionalität: 5,7 |
| Jeffamine T3000 | Aminterminiertes Propylenoxid mit 3 primären Aminogruppen, die am Nachbarkohlenstoff eine Methylgruppe tragen. Tg = -70°C. Molekulargewicht = 3000 g/mol, mittlere Funktionalität: 5,91 |
| Dyhard 100S | Latenter Härter der Firma AlzChem für Epoxidsysteme bestehend aus mikronisiertem Dicyandiamid bei dem 98 % der Partikel kleiner 10 μm sind. |
| Dyhard UR500 | Latenter Uronbeschleuniger für Epoxidsysteme bei dem 98 % der Partikel kleiner 10 μm sind. |

Tabelle 1: K= Erfindungsgemäße Klebemasse; V= Vergleichsbeispiel

| | f | Tg /°C | K1 | K2 | K3 | K4 | V1 | V2 | V3 | V4 |
|---|---|---|---|---|---|---|---|---|---|---|
| Epiclon N-673 | 5,4 | 30 | 11,81 | 11,81 | 11,81 | 11,81 | 20,25 | | 15,81 | 10,16 |
| PD3611 | 2 | -10 | 14,73 | 14,73 | 14,73 | 14,73 | 18 | | 19,71 | 12,67 |
| Epikote828 | 2 | -16 | 11,81 | 11,81 | 11,81 | 11,81 | 6,75 | 30 | 15,81 | 10,16 |
| Jeffamin T403 | 5,7 | -61 | | | | 1,45 | 1,23 | | | |
| Jeffamin T3000 | 5,91 | -70 | 9,86 | 11,44 | 8,86 | | | | 21,11 | 6,8 |
| Hypro 1300X45 ATBN | 1,8 | -52 | | | | | | 60 | | |
| Dyhard 100S | | | 2,34 | 2,29 | 2,38 | 2,36 | 2,46 | | 2,87 | 2,07 |
| Dyhard UR500 | | | 0,17 | 0,16 | 0,17 | 0,17 | 0,19 | | 0,21 | 0,15 |
| | | | | | | | | | | |

(fortgesetzt)

|  | f | Tg / °C | K1 | K2 | K3 | K4 | V1 | V2 | V3 | V4 |
|---|---|---|---|---|---|---|---|---|---|---|
| Mischungs-Tg (Epoxy-Amin-Mischung) / °C |  |  | -18,6 | -20,6 | -17,2 | -4,2 | 4,3 |  | -25,5 | -15,8 |
| f(epoxy) |  |  | 2,64 | 2,64 | 2,64 | 2,64 | 3,15 | 2 | 2,64 | 2,64 |
| f(amin) |  |  | 5,91 | 5,91 | 5,91 | 5,7 | 5,7 | 1,8 | 5,91 | 5,91 |
| $\alpha_{gel}$ (theor.) |  |  | 12,4 | 12,4 | 12,4 | 12,4 | 9,9 | n.m. | 12,4 | 12,4 |
| Umsatz Epoxy |  |  | 12,5 | 14,5 | 11,2 | 12,0 | 10 | 45* | 20 | 10 |
| KK Verlust nach 2Monaten @23°C |  |  | 3% | 2% | 5% | 1% | n.b. | 100% | 4% | 3% |
| Slipping / mm |  |  | 0 | 0 | 1 | 0 | n.b. | 0 | nein | 4 |
| vernetzt |  |  | ja | ja | ja | ja | ja | ja | ja | nein |
| Verklebungsfestigkeit / MPa |  |  | 19,7 | 18,1 | 19,9 | 13,4 | n.b. | n.b. | 9,9 AF | 20,6 |

*nach 60d bei 23°C. Aminmenge sollte 20% Epoxidumsatz ergeben. Umsatz steigt kontinuierlich nach 24h waren bereits 20% umgesetzt, nach 500h bereits 30%.

n.b.: nicht bestimmbar, da die Klebmasse bei Raumtemperatur nicht haftklebrig ist n.m.: Funktionalität der beiden Reaktanden zu gering, um eine Vernetzung erreichen zu können

Der Epoxidumsatz der Klebmassen K1-K4 liegt im erfindungsgemäßen Bereich um den theoretischen Umsatz am Gelpunkt. Sie sind vernetzt, bestehen den slipping Test und zeigen vergleichbare Verklebungsfestigkeiten. Auch nach Lagerung für 2 Monate bei RT behalten diese Klebmassen ihre Haftklebrigkeit. Wird die Vorvernetzung zu weit geführt, wie in V3, so werden die Klebmassen zu kohäsiv, sodass es im Verklebungstest zu niedrigeren Werten und adhäsivem Versagen kommt. Wenn im Gegenzug zu wenig vorvernetzt wird, so sind zwar die Verklebungsfestigkeiten gut, jedoch bestehen solche Klebmassen den Slippingtest nicht (V4).

Werden Rohstoffe mit zu hohem Tg verwendet (V1), so führt die Erhöhung des Tg im Vorvernetzungsschritt zu nicht-haftklebrigen Systemen.

Auch wenn nicht erfindungsgemäße Polyamine (ohne die erfindungsgemäße sterische Hinderung) verwendet werden (V2) werden keine haftklebrigen Systeme erhalten, da die Epoxide immer weiterreagieren. Es kommt zur anionischen Epoxidpolymerisation und somit wird V2 vernetzt, obwohl ein solches System mit f(Epoxy)=2 und f(Amin)=1,8 theoretisch bei einer reinen Additionsreaktion nicht vernetzen kann.

**Patentansprüche**

1.   Verfahren zur Herstellung einer vorvernetzten Haftklebemasse durch in-Kontakt-Bringen und anschließendes Vermischen der folgenden Komponenten:

a) mindestens ein Polyetheramin, welches mindestens zwei endständige -NH$_2$ Gruppen enthält und in alpha-Stellung zu mindestens einer -NH$_2$ Gruppe mindestens einen Alkylrest enthält;
b) mindestens ein Epoxidharz;
c) mindestens einen, von a) verschiedenen Härter;
d) gegebenenfalls mindestens einen Beschleuniger; und
e) gegebenenfalls mindestens ein Additiv; wobei
der Epoxidumsatz U$_{epoxy}$ = 0,85 $\alpha_{gel}$ bis 1,3 $\alpha_{gel}$ beträgt und $\alpha_{gel}$ der Gelpunkt, berechnet wie in der Beschreibung definiert, der Zusammensetzung ist; und
der Mischungs-Tg, gemessen wie in der Beschreibung definiert, der Komponenten a) und b) unter 0 °C liegt.

2.   Verfahren nach Anspruch 1, **dadurch gekennzeichnet, dass** das Vermischen

i) in einem Mischer stattfindet; und/oder

ii) wobei die Komponenten gemeinsam vor dem Vermischen erwärmt werden; und/oder

iii) wobei die Komponenten während des Vermischens erwärmt werden; und/oder

iv) die Zugabe des mindestens einen Härters c) am Ende des Mischprozesses bei Temperaturen von weniger als 80°C erfolgt.

3. Verfahren nach Anspruch 1 oder 2, **dadurch gekennzeichnet, dass** das mindestens eine Polyetheramin ein gewichtsmittleres Molekulargewicht (Mw), gemessen wie in der Beschreibung definiert, von 150 bis 6000 g/mol aufweist.

4. Verfahren nach einem der vorstehenden Ansprüche, **dadurch gekennzeichnet, dass** das mindestens eine Epoxidharz

i) einen Tg, gemessen wie in der Beschreibung definiert, von -100 bis 60 °C aufweist; und/oder

ii) eine mittlere Funktionalität von 2 bis 15 aufweist; und/oder

iii) eine Erweichungstemperatur von mindestens 45°C aufweist; und/oder

iv) eine Viskosität, gemessen wie in der Beschreibung definiert, bei 25°C von mindestens 10 Pa*s aufweist.

5. Verfahren nach einem der vorstehenden Ansprüche, **dadurch gekennzeichnet, dass** mindestens ein bei 23°C flüssiges Epoxidharz und mindestens ein bei 23°C festes Epoxidharz enthalten sind.

6. Verfahren nach einem der vorstehenden Ansprüche, **dadurch gekennzeichnet, dass** der mindestens eine von a) verschiedene Härter c)

i) ausgewählt ist aus Dicyandiamiden, Phenolnovolaken, Cresolnovolaken, Anhydriden, Epoxy-Amin-Addukten, Hydraziden oder Mischungen davon; und/oder

ii) einen $T_{peak}$ ermittelt mit DSC von mehr als 60 °C aufweist.

7. Verfahren nach einem der vorstehenden Ansprüche, **dadurch gekennzeichnet, dass** der mindestens eine Beschleuniger d) ausgewählt ist aus Harnstoffderivaten, Imidazolen oder Mischungen davon.

8. Vorvernetzte Haftklebemasse, erhältlich nach einem Verfahren nach einem der Ansprüche 1 bis 7.

9. Klebeband umfassend die vorvernetzte Haftklebemasse gemäß Anspruch 8.

10. Klebeband gemäß Anspruch 9, **dadurch gekennzeichnet, dass** die Haftklebemasse eine Schichtdicke von 20 bis 4000 $\mu$m aufweist.

11. Verwendung des Klebebands gemäß Anspruch 9 oder 10 zum Fixieren von Punkthaltern.

12. Verwendung des Klebebands gemäß Anspruch 9 oder 10 zum Fixieren von Gegenständen im Automobil.

13. Härtbare Zusammensetzung, umfassend oder bestehend aus:

a) mindestens ein Polyetheramin, welches mindestens zwei endständige -NH$_2$ Gruppen enthält und in alpha-Stellung zu mindestens einer -NH$_2$ Gruppe mindestens einen Alkylrest enthält;

b) mindestens ein Epoxidharz;

c) mindestens einen, von a) verschiedenen Härter;

d) gegebenenfalls mindestens einen Beschleuniger; und

e) gegebenenfalls mindestens ein Additiv, wobei

der Mischungs-Tg, gemessen wie in der Beschreibung definiert, der Komponenten a) und b) unter 0 °C liegt.

## Claims

1. Process for producing a pre-crosslinked pressure-sensitive adhesive by contacting and subsequently mixing the following components:

a) at least one polyetheramine which contains at least two terminal -NH$_2$ groups and contains at least one alkyl radical in alpha position to at least one -NH$_2$ group;
b) at least one epoxy resin;
c) at least one hardener different from a);
d) optionally at least one accelerator; and
e) optionally at least one additive; where

the epoxy conversion U$_{epoxy}$ = 0.85 $\alpha_{gel}$ to 1.3 $\alpha_{gel}$ and $\alpha_{gel}$ is the gel point, calculated as defined in the description, of the composition, and the mixed Tg, measured as defined in the description, of components a) and b) is under 0°C.

2. Process according to Claim 1, **characterized in that** the mixing

i) takes place in a mixer; and/or
ii) the components are jointly heated prior to the mixing; and/or
iii) the components are heated during the mixing; and/or
iv) the addition of the at least one hardener c) takes place at the end of the mixing operation at temperatures of less than 80°C.

3. Process according to Claim 1 or 2, **characterized in that** the at least one polyetheramine has a weight-average molecular weight (Mw), measured as defined in the description, of 150 to 6000 g/mol.

4. Process according to any of the preceding claims, **characterized in that** the at least one epoxy resin

i) has a Tg, measured as defined in the description, of -100 to 60°C; and/or
ii) has a mean functionality of 2 to 15; and/or
iii) has a softening temperature of at least 45°C; and/or
iv) has a viscosity, measured as defined in the description, at 25°C of at least 10 Pa*s.

5. Process according to any of the preceding claims, **characterized in that** there are at least one epoxy resin liquid at 23°C and at least one epoxy resin solid at 23°C.

6. Process according to any of the preceding claims, **characterized in that** the at least one hardener c) different from a)

i) is selected from dicyandiamides, phenol novolacs, cresol novolacs, anhydrides, epoxy-amine adducts, hydrazides or mixtures thereof; and/or
ii) has a T$_{peak}$ determined by DSC of more than 60°C.

7. Process according to any of the preceding claims, **characterized in that** the at least one accelerator d) is selected from urea derivatives, imidazoles or mixtures thereof.

8. Pre-crosslinked pressure-sensitive adhesive, obtainable by a process according to any of Claims 1 to 7.

9. Adhesive tape comprising the pre-crosslinked pressure-sensitive adhesive according to Claim 8.

10. Adhesive tape according to Claim 9, **characterized in that** the pressure-sensitive adhesive has a layer thickness of 20 to 4000 $\mu$m.

11. Use of the adhesive tape according to Claim 9 or 10 for securing single-point mounts.

12. Use of the adhesive tape according to Claim 9 or 10 for securing articles in a car.

13. Curable composition comprising or consisting of:

a) at least one polyetheramine which contains at least two terminal -NH$_2$ groups and contains at least one alkyl radical in alpha position to at least one -NH$_2$ group;
b) at least one epoxy resin;
c) at least one hardener different from a);
d) optionally at least one accelerator; and

EP 3 916 066 B1

e) optionally at least one additive; where

the mixed Tg, measured as defined in the description, of components a) and b) is under 0°C.

**Revendications**

1. Procédé de fabrication d'une masse adhésive de contact pré-réticulée par mise en contact, puis mélange, des composants suivants :

   a) au moins une polyétheramine, qui contient au moins deux groupes -NH$_2$ terminaux et en position alpha par rapport à un groupe -NH$_2$ contient au moins un radical alkyle ;
   b) au moins une résine époxyde ;
   c) au moins un durcisseur différent de a) ;
   d) éventuellement au moins un accélérateur ; et
   e) éventuellement au moins un additif ;
   dans lequel le taux de conversion de l'époxyde U$_{époxy}$ = 0,85 $\alpha_{gel}$ à 1,3 $\alpha_{gel}$, et $\alpha_{gel}$ est le point de gélification, calculé comme défini dans la description, de la composition ; et
   la Tg du mélange, mesurée comme défini dans la description, des composants a) et b) est inférieure à 0 °C.

2. Procédé selon la revendication 1, **caractérisé en ce que**

   i) le mélange est mis en œuvre dans un mélangeur ; et/ou
   ii) les composants sont chauffés conjointement avant le prémélange ; et/ou
   iii) les composants sont chauffés pendant le mélange ; et/ou
   iv) l'addition de l'au moins un durcisseur c) a lieu à la fin du processus de mélange à des températures inférieures à 80 °C.

3. Procédé selon la revendication 1 ou 2, **caractérisé en ce que** l'au moins une polyétheramine présente une masse moléculaire moyenne en masse (Mw), mesurée comme défini dans la description, de 150 à 6 000 g/mol.

4. Procédé selon l'une des revendications précédentes, **caractérisé en ce que** l'au moins une résine époxyde

   i) présente une Tg, mesurée comme décrit dans la description, de -100 à 60 °C ; et/ou
   ii) présente une fonctionnalité moyenne de 2 à 15 ; et/ou
   iii) présente une température de ramollissement d'au moins 45 °C ; et/ou
   iv) présente une viscosité, mesurée comme décrit dans la description, à 25 °C d'au moins 10 Pa*s.

5. Procédé selon l'une des revendications précédentes, **caractérisé en ce qu'**on a présentes au moins une résine époxyde liquide à 23 °C et au moins une résine époxyde solide à 23 °C.

6. Procédé selon l'une des revendications précédentes, **caractérisé en ce que** l'au moins un durcisseur c) différent de a)

   i) est choisi parmi les dicyanodiamides, les novolaques du phénol, les novolaques du crésol, les anhydrides, les produits d'addition époxy-amine, les hydrazides ou les mélanges de ceux-ci ; et/ou
   ii) présente une T$_{max}$, déterminée par ACD, supérieure à 60 °C.

7. Procédé selon l'une des revendications précédentes, **caractérisé en ce que** l'au moins un accélérateur d) est choisi parmi les dérivés de l'urée, les imidazoles ou les mélanges de ceux-ci.

8. Masse adhésive de contact pré-réticulée pouvant être obtenue par un procédé selon l'une des revendications 1 à 7.

9. Ruban adhésif comprenant la masse adhésive de contact pré-réticulée selon la revendication 8.

10. Ruban adhésif selon la revendication 9, **caractérisé en ce que** la masse adhésive de contact présente une épaisseur de couche de 20 à 4 000 µm.

**11.** Utilisation du ruban adhésif selon la revendication 9 ou 10 pour fixer des fixations ponctuelles.

**12.** Utilisation du ruban adhésif selon la revendication 9 ou 10 pour la fixation d'objets dans une automobile.

**13.** Composition durcissable comprenant, ou en étant constituée :

a) au moins une polyétheramine, qui contient au moins deux groupes -$NH_2$ terminaux et en position alpha par rapport à au moins un groupe -$NH_2$ contient au moins un radical alkyle ;
b) au moins une résine époxyde ;
c) au moins un durcisseur différent de a) ;
d) éventuellement au moins un accélérateur ; et
e) éventuellement au moins un additif,

la Tg du mélange, mesurée comme défini dans la description, des composants a) et b) étant inférieure à 0 °C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2553035 A1
- US 20130267136 A1
- WO 9314141 A1
- US 3117099 A
- US 3018262 A
- WO 2019101918 A1
- US 6838170 B2
- US 9589693 B2